# EUROPEAN PATENT SPECIFICATION

(11) **EP 3 673 628 B1**
(45) Date of publication and mention of the grant of the patent: **16.10.2024**
(21) Application number: 18811390.6
(22) Date of filing: 23.10.2018
(51) Int. Cl.: H04L 45/302, H04L 45/00, H04L 12/46

(54) **SPECIFYING AND UTILIZING PATHS THROUGH A NETWORK**
SPEZIFIZIERUNG UND NUTZUNG VON PFADEN DURCH EIN NETZWERK
SPÉCIFICATION ET UTILISATION DE CHEMINS À TRAVERS UN RÉSEAU

(30) Priority: 26.01.2018 US 201815881663; 26.01.2018 US 201815881652
(43) Date of publication of application: 01.07.2020
(73) Proprietor: Nicira, Inc., Palo Alto, CA 94304 (US)
(72) Inventor: BOUTROS, Sami, Palo Alto, CA 94304 (US); DUBEY, Ankur, Palo Alto, CA 94304 (US); PARSA, Mike, Palo Alto, CA 94304 (US); CIDON, Israel, Palo Alto, CA 94304 (US); VENUGOPAL, Prashanth, Palo Alto, CA 94304 (US)
(74) Representative: Dilg, Haeusler, Schindelmann Patentanwaltsgesellschaft mbH
(86) International application number: PCT/US2018/057181
(87) International publication number: WO 2019/147316

(56) References cited:
- US-A1- 2017 310 588
- US-B2- 9 860 079

## Description

### BACKGROUND

Traffic engineering refers to a process by which a network administrative program defines specific paths through the network for a series of data message flows. The approaches used to date include MPLS (multiprotocol label switching) techniques that add path descriptive information between layers 2 and 3 headers. Because of this location of the path description, MPLS is commonly referred to as a layer 2.5 protocol. The MPLS techniques, and other previous traffic engineering techniques, however do not readily support encapsulating tenant identifiers. Tying these prior solutions to a tenant will require other policies and multiple encapsulations for the overlay and underlay.

US2017/0310588A1 Zuo concerns data forwarding in a software-defined network. US9,860,079B2 concerns redirecting packets for egress from an autonomous system using tenant-specific routing and forwarding tables.

### BRIEF SUMMARY

The present invention is defined according to the independent claims. Further embodiments are set forth in the dependent claims.

### BRIEF DESCRIPTION OF THE DRAWINGS

For purposes of explanation, several examples are set forth in the following figures.
Figure 1 illustrates an example of specifying and using a specifically defined path according to some examples.
Figure 2 illustrates a Geneve tunnel header of some examples.
Figure 3 illustrates a Geneve base header of some examples.
Figure 4 conceptually illustrates a process performed by an ingress hop in some examples.
Figure 5 illustrates a process that a hop along a path performs when it receives a Geneve-encapsulated data message.
Figure 6 illustrates a host computer that is used in some examples to execute the virtual machines, service machines and path processors of some examples.
Figure 7 illustrates an example of how the path processors are managed in some examples.
Figure 8 conceptually illustrates a computer system with which some examples are implemented.

### DETAILED DESCRIPTION

In the following detailed description, numerous details, examples, and examples are set forth and described. However, it will be clear and apparent to one skilled in the art that the invention is not limited to the examples set forth and that the invention may be practiced without some of the specific details and examples discussed.

For a multi -tenant environment, some examples provide a method for (1) embedding a specific path for a tenant's data message flow through a network in tunnel headers encapsulating the data message flow, and then (2) using the embedded path information to direct the data message flow through the network. In some examples, the encapsulating tunnel header is placed before (i.e., outside of) the layers 2-4 header of each data message in the flow.

According to the claimed invention, with an outer tunnel header that is placed outside of layers 2, 3, and 4 headers of each data message of a flow, each data message in the flow is encapsulated, each outer tunnel header storing the plurality of forwarding-element IP addresses identifying plurality of forwarding elements on a candidate first path specified by an identified path-defining rule.

In some examples, the method selects the specific path from two or more viable such paths through the network for the data message flow. To select the path from the set of viable paths between the source and destination of the data message flow, the method in some examples performs a classification operation on a data message flow. The classification operation in some examples can be based on the data message flow's layer 2-4 header values (e.g., five tuple identifier, i.e., protocol, source and destination ports, and source and destination IP addresses) and/or its associated contextual attributes, such as its traffic type (i.e., the type of content carried in the data message flow), QoS ratings, layer 7 parameters, process identifiers, user identifiers, group identifiers, etc. When the set of contextual attributes include the flow's traffic type, the method provides a novel way for selecting a traffic-engineered path for a data message flow, embedding information about this path in the tunnel headers of the data message flow, and using this information to direct the data message flow through a network.

After selecting the path for the data message flow, the method in some examples embeds the identified path in tunnel headers that it uses to encapsulate the flow's data messages. Also, in some examples, the method embeds in the tunnel headers a tenant identifier (e.g., embeds a VNI, virtual network identifier) to specify that the data messages are associated with a particular tenant (e.g., are emanating from a machine of the particular tenant). The method sends the encapsulated messages along a tunnel to a first intervening forwarding element that serves as the first hop along the selected path.

The method in some examples identifies the selected path, and embeds this path in the tunnel header, by identifying and embedding a list of network addresses (e.g., destination IP addresses) for the hops (e.g., intervening forwarding elements) along the path. Also, the method in some examples embeds a hop index value in the tunnel header that identifies one of the embedded network addresses as the network address of the"next" hop that is used to identify the next hop along the path. As further described below, each hop along the path decrements the hop index value as the hops along the path are embedded in the tunnel header in a reverse order (with the first hop appearing last in the list of hops and the last hop appearing first on the list of hops).

In some examples, the hops along the selected path are connected to each other through a set of tunnels. Some or all of the hops in some examples include software forwarding elements (SFEs) executing on host computers. Examples of such SFEs include software routers and switches in some examples. In some examples, one or more of the hops are hardware forwarding elements, such as top-of-rack switches, hardware routers, etc.

After selecting the path for a data message and encapsulating the data message with a tunnel header that contains the network addresses of the hops along the path, the method in some examples passes the encapsulated data message along a tunnel to the first hop (e.g., first SFE) along the path after forwarding element connected to the source machine (e.g., after the software forwarding element executing on the same host computer with the source machine). The outer portion of the tunnel header includes source and destination network addresses. At the ingress hop, the source address of the outer portion is the network address (e.g., IP address) of the ingress hop (or a virtual tunnel endpoint (VTEP) used by this hop) that initially sends the message along the tunnel and the destination address is the network address of the first hop (or its VTEP) that receives the message along the tunnel.

As used in this document, data messages refer to a collection of bits in a particular format sent across a network. One of ordinary skill in the art will recognize that the term data message is used in this document to refer to various formatted collections of bits that may be sent across a network, such as Ethernet frames, IP packets, TCP segments, UDP datagrams, etc. Also, as used in this document, references to L2, L3, L4, and L7 layers (or layer 2, layer 3, layer 4, layer 7) are references respectively to the second data link layer, the third network layer, the fourth transport layer, and the seventh application layer of the OSI (Open System Interconnection) layer model.

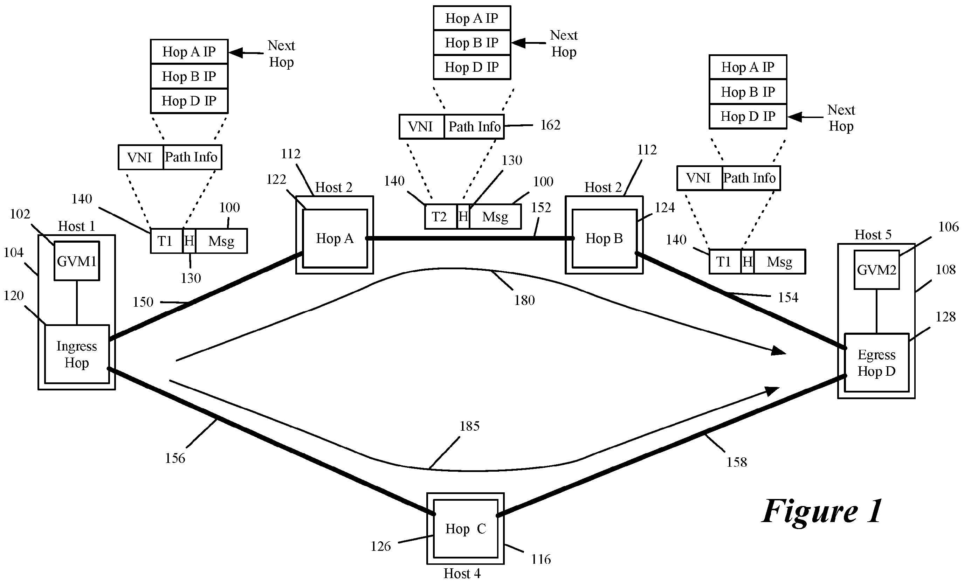

Figure 1 illustrates an example of specifying and using a traffic-engineered path according to some examples . In this example, two paths 180 and 185 are specifically specified in a network between two guest virtual machines (GVMs) 102 and 106 executing on two hosts 104 and 108 in a multi -tenant datacenter. The GVMs belong to a tenant that is associated in the datacenter with a particular virtual network identifier VNI. Even though in the example illustrated in Figure 1 the embedded path information allows the data message flow to take a particular path through one datacenter, one of ordinary skill will realize that in other examples this path information is used to specify a path between machines in two or more datacenters of the same enterprise, of the same public cloud provider, and/or of different public cloud providers. Similarly, in some examples, this path information can be used to specify a path between machines residing in one or more private datacenters or branch offices and one or more public cloud datacenters.

Each path 180 or 185 starts at an ingress SFE (e.g., software switch or router) 120 executing on the host 104, and terminates at an egress SFE 128 executing on the host 108. These SFEs 120 and 128 serve as the ingress and egress hops for each path. Each path also has one or more intervening hops, with path 180 having intervening hops 122 and 124, and the path 185 having intervening hop 126. Each path is formed by a series of tunnels 150-158 that are established between neighboring hops along the path. In this example, each hop includes a software forwarding element executing on a host computer, although this does not have to be the case. For instance, in some examples, one or more of the intervening hops can be top-of-rack switches, spine switches, hardware routers or any other kind of forwarding element.

In the example illustrated in Figure 1, the path 180 is selected for a data message flow from the GVM 102 to the GVM 106. As shown, the ingress and intervening hops pass the data message along the path through the tunnels 150, 152, and 154 with an encapsulating tunnel header 140 that is placed before (i.e., outside of) the layers 2-4 header 130 of the data message 100. Also, as the encapsulated data message is sent along each tunnel, the tunnel header's outer portion (not shown) identifies the IP addresses of the source and destination endpoints of the tunnel as the source and destination IP addresses of the encapsulated data message.

In some examples, the source and destination tunnel endpoints are VTEPs associated with the two hop endpoints of the tunnel. For example, for the tunnel 150, the outer portion of the tunnel header 140 identifies the IP addresses of a VTEP of the ingress hop 120 as the encapsulated data message's source IP address, while identifying the IP addresses of a VTEP of the hop 122 as the encapsulated data message's destination IP address. In the encapsulated data message forwarded by the ingress hop 120 or either intervening hop 122 or 124, the tunnel header 140 includes the tenant's VNI and a path description that specifies the remaining portion of the path at that hop. As shown, the path description in some examples is expressed in terms of a list of IP addresses of the remaining hops.

According to the claimed invention, with an outer tunnel header that is placed outside of layers 2, 3, and 4 headers of each data message of a flow, each data message in the flow is encapsulated, each outer tunnel header storing the plurality of forwarding-element IP addresses identifying plurality of forwarding elements on a candidate first path specified by an identified path-defining rule.

In some examples, the ingress hop 120 includes the SFE that receives the data message from the source GVM 102, and a path processing filter that executes on the same host computer 104. As further described below, a hook (e.g., a callback function) is defined in a port of the SFE to intercept the data message sent by the source GVM 102 and to forward the data message to the path-processing filter. This filter then performs a classification operation on the data message, in order to select the path 180 for the data message to its destination GVM 106.

This classification operation selects the path 180 from the group of two candidate paths 180 and 185 that are viable candidate paths that have been specifically defined (e.g., by a controller or a forwarding element) to reach the destination GVM 106. In some examples, the classification operation is based on a set of attributes associated with the data message flow. This attribute set in some examples just includes the data message flow's layer 2-4 header values. In other examples, however, the attribute set includes contextual attributes related to the data message flow, such as the data message flow's traffic type (i.e., the type of content carried in the data message flow), QoS ratings, layer 7 parameters, process identifiers, user identifiers, group identifiers, etc.

When the set of contextual attributes include the flow's traffic type, the ingress hop selects a traffic-engineered path for a data message flow, embeds information about this path in the tunnel headers of the data message flow, and uses this information to direct the data message flow through a network. For instance, based on deep packet inspection performed on host computer 104, a first data message flow between the GVMs 102 and 106 might be identified as carrying video conference data for corporate executives, while a second data message flow between these two GVMs might be identified as carrying chat message data between two non executives. Based on this contextual data, path 180 is selected for the first message flow as this path might be more optimal for delay or latency, while path 185 is selected for the second message flow as this path might be more optimal for cost.

After selecting the path for the intercepted data message, the ingress hop's path processing filter in some examples embeds the selected path in the tunnel header 140 that it uses to encapsulate the data message 100. As shown, the path-processing filter in some examples identifies and embeds the selected path in terms of the IP addresses of the intervening hops 122 and 124 and the egress hop 128. In addition to the IP addresses of these hops, the ingress path-processing filter embeds in the tunnel header a tenant identifier (which in this case is the particular tenant's VNI) to specify that the data message 100 is associated with the particular tenant (e.g., are emanating from a GVM of the particular tenant).

The ingress path-processing filter in some examples embeds the network addresses of the endpoints of the first tunnel 150 in the outer portion of the tunnel header 140. This path processing filter in some examples also embeds a next hop value in the tunnel header that identifies the embedded network address of the intervening hop 122 as the network address of the"next" hop. As further described below, subsequent hops along the path use this index in some examples to identify the next hop along the path.

After selecting the path for the data message 100 and encapsulating the data message with the tunnel header 140, the ingress hop 120 passes the encapsulated data message along the tunnel 150 to the intervening hop 122. As mentioned above, the outer portion of the tunnel header 140 in some examples identifies the IP addresses of a VTEP of the ingress hop 120 as the encapsulated data message's source IP address, while identifying the IP addresses of a VTEP of the first hop 122 as the encapsulated data message's destination IP address.

At each subsequent hop 122, 124 or 128 along the path 180, the hop inspects the tunnel header and determines that the received data message is addressed to it. Each particular hop makes this determination in some examples by extracting the hop index from the tunnel, using this index to retrieve the network address of the next hop from the tunnel header, and then determining that address is its network address. After determining that the received data message identifies it as the next hop, the particular hop determines whether it is specified as the last hop of the specified path.

If not, the particular hop forwards the encapsulated data message along another tunnel to another hop after adjusting the tunnel header parameters. Specifically, to forward the data message to the other hop, the particular hop in some examples (1) decrements the next hop index (extracted from the received data message's tunnel header) to identify the network address of the other hop as the network address of the next hop along the path, (2) resolves the next hop's network address to an underlay tunnel that starts at the particular hop and terminates at the next hop, and (3) embeds this decremented hop index value in the tunnel header along with the tenant identifier and the list of network addresses of the hops along the path.

Figure 1 illustrates the adjustment to the next hop index by showing this index as (1) initially referencing the IP address of hop 122 when the encapsulated data message leaves the ingress hop, (2) referencing the IP address of hop 124 when the encapsulated data message leaves the hop 122, and (3) referencing the IP address of hop 128 when the encapsulated data message leave the hop 124. Each particular hop also adjusts the outer portion of the tunnel header so that the network address of the particular hop is the source network address, and the network address of the subsequent hop along the path 180 is the destination network address, of the encapsulated data message. For example, the hop 122 places its IP address as the source IP address of the outer header, and the IP address of hop 124 as the destination IP address in this header. Similarly, the hop 124 places its IP address as the source IP address of the outer header, and the IP address of egress hop 128 as the destination IP address in this header.

Instead of adjusting the tunnel header parameters, the particular hop in other examples decapsulates (i.e., removes) the tunnel header from the received data message, and re-encapsulates the data message with a new tunnel header. Also, other examples do not store a next hop index in the tunnel headers, as in these examples, each intervening hop is configured to select the next hop address (e.g., the first hop address) and to remove its network address from the list of path-hop network addresses embedded in the tunnel before passing the encapsulated data message to the next hop along the path.

When the encapsulated data message reaches the egress hop 128, this hop determines that it is specified as the last hop along the path that is embedded in the tunnel header of the data message (e.g., determines that the next hop index is its smallest value and it identifies this hop's address). Hence, it removes the tunnel header and examines the destination network address embedded in the data message's header 130. This destination network address (e.g., IP address) is the IP address of GVM 106 connected to it. Accordingly, egress hop provides the decapsulated data message to this machine.

In Figure 1, the egress hop communicatively connects to the destination machine of the data message without having to go through intervening routing/switching fabric. In other examples, the egress hop connects to the message's destination (e.g., destination computer, virtual machine or container) through an intervening fabric (i.e., through intervening routers/switches). In these cases, the egress hop forwards the data message through the intervening fabric.

Some examples use Generic Network Virtualization Encapsulation (Geneve) tunneling protocol, to carry the path information (e.g., the next hop index and the list of hops along the path) and the tenant identifier. In some examples, the path information is embedded in a Geneve option TLV (type, length, value) that is examined by the hops along the path in order to identify the next hop, if any.

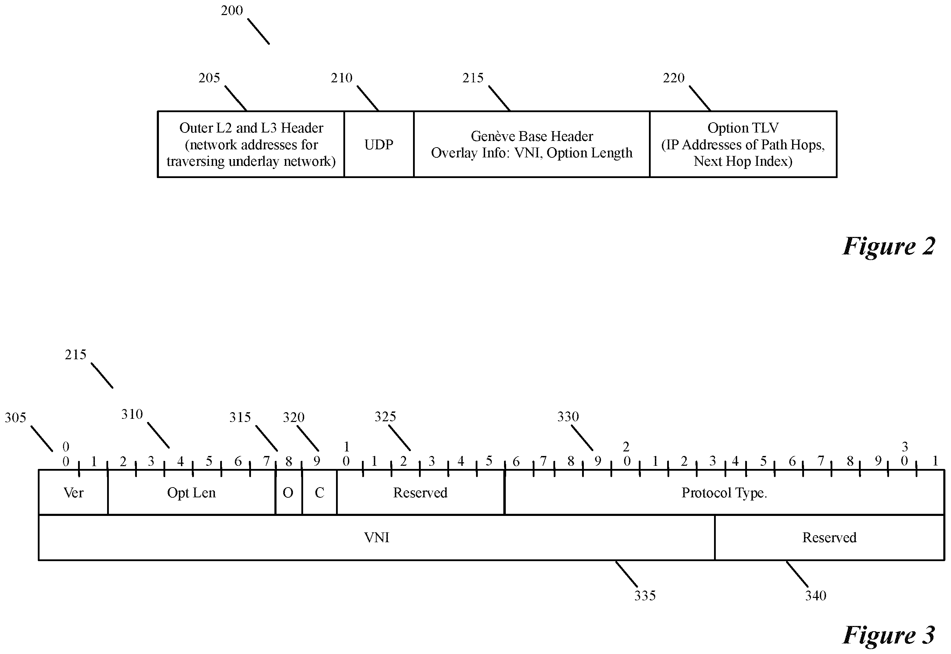

Figure 2 illustrates the Geneve tunnel header 200 used in some examples. In some examples, this tunnel header 200 is a standard Geneve tunnel header that has an option TLV to store the path information and next hop index. Specifically, as shown, this tunnel header includes an outer header 205, a protocol field 210, a Geneve base header 215, and an option TLV 220. As described above, the outer portion 205 of the tunnel header 200 includes the network addresses (e.g., source and destination IP addresses of the two endpoints of the tunnel, with the source and destination designation depending on the direction of the message flow) in the underlay network that allow the encapsulated data message to traverse the underlay network and reach the tunnel destination endpoint. The protocol field 210 specifies a UDP protocol as well as attributes associated with this protocol.

Figure 3 illustrates the Geneve base header 215 of some examples. As shown, this header in some examples is 64-bit wide and stores several tunnel parameters, including the tenant identifier and the option length. Its version field 305 is a 2-bit value that specifies the current Geneve tunnel version being used. Tunnel endpoints that receive messages with unknown versions drop the messages. Non-terminating devices processing Geneve packets with an unknown version number treat them as UDP packets with an unknown payload.

The option length field 310 specifies the length of the options fields, expressed in four byte multiples, not including the eight byte fixed tunnel header. This results in a minimum total Geneve header size of 8 bytes and a maximum of 260 bytes. The start of the payload headers can be found using this offset from the end of the base Geneve header. The O bit 315 specifies whether the data message is an OAM frame that contains a control message instead of a data payload. Endpoints do not forward the payload of this message and transit devices do not attempt to interpret or process it. Since control messages are not frequent, the endpoints typically direct these messages to a high priority control queue. The transit devices do not alter forwarding behavior on the basis of this bit, such as ECMP link selection.

The C bit 320 is a critical option field that when set, indicates that the options are present. One or more options can have the critical bit set. If this bit is set then tunnel endpoints parses the options list to interpret any critical options. When this bit is set, endpoints must drop the encapsulated message if they do not recognize this option. On devices where option parsing is not supported, the frame is dropped on the basis of the"C" bit in the base header. If the bit is not set tunnel endpoints may strip all options using"Opt Len" and forward the decapsulated frame. Transit devices do not drop or modify packets on the basis of this bit.

The first set of reserved bits 325 are 6 bits that must be zero on transmission and ignored on receipt. The protocol type bits 330 are 16 bits that express the type of the protocol data unit appearing after the Geneve header. The VNI bits 335 express a 24-bit identifier for a unique element of a virtual network. In many situations, this may represent an L2 segment, however, the control plane defines the forwarding semantics of decapsulated packets. The VNI may be used as part of ECMP forwarding decisions or may be used as a mechanism to distinguish between overlapping address spaces contained in the encapsulated packet when load balancing across CPETs. The second set of reserved bits 340 are 8 bits that must be zero on transmission and ignored on receipt.

The Geneve base header is followed by the option TLV 220. This TLV includes a four-byte option header and a variable amount of option data interpreted according to the option type. The option data in some examples includes the IP addresses of the hops along the path plus a next hop index that identifies one of these IP addresses as the IP address of the next hop along the path.

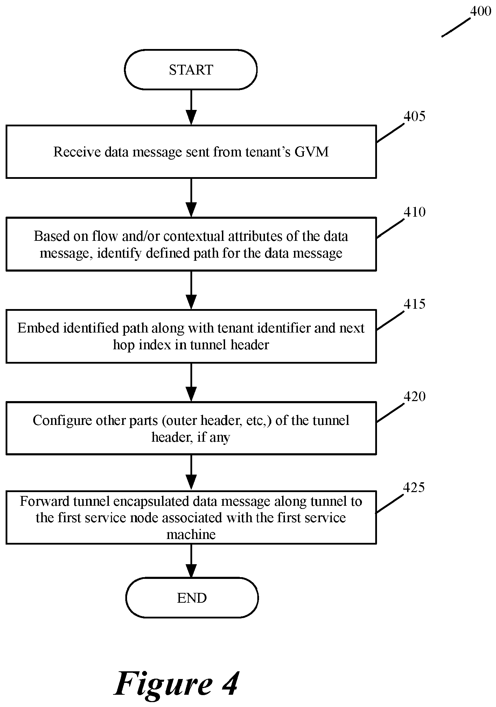

Figure 4 conceptually illustrates a process 400 performed by an ingress hop (like hop 120) of some examples. This process selects a path for a data message sent by a tenant GVM on a host computer, and then embeds a path hop list, which defines this path, in a Geneve tunnel header that it uses to encapsulate the data message, before sending this encapsulated message along a tunnel to the first hop along the selected path. In some examples, the ingress hop includes an SFE (e.g., software switch) and a path processing filter that execute on the host computer (e.g., computer 104) along with the tenant GVM (e.g., GVM 102) that sends the data message. In some examples, the GVMs on the host computer communicatively connect with the SFE, which forwards data messages to and from the GVMs.

As shown, the process 400 initially receives (at 405) a data message from the tenant GVM (e.g., GVM 102) executing on its host (e.g., 104). In some examples, the process 400 receives this data message from a callback function that is defined in the port of the SFE or VNIC of the GVM. This callback function intercepts data messages sent by the GVM and forwards the data messages to the path-processing filter.

Based on a set of attributes associated with the data message, the process (e.g., the path processing filter) performs (at 410) a classification operation on the data message, in order to select a defined path through the network to the data message's destination. For at least some of the data messages, this classification operation selects the path from a group of two or more candidate paths that are viable candidate paths that have been specifically defined (e.g., by a controller or a forwarding element) to reach the destination of the data message.

In some examples, the classification operation is based on a set of attributes associated with the data message. This attribute set in some examples just includes the data message's layer 2-4 header values. In other examples, however, the attribute set includes contextual attributes related to the data message, such as the data message's traffic type (i.e., the type of content carried in the data message's flow), QoS ratings, layer 7 parameters, process identifiers, user identifiers, group identifiers, etc. When the set of contextual attributes include the data message's traffic type, the process selects (at 410) a path that is defined for the data message's flow based on the traffic that is carried in this message flow. In some examples, the process 400 uses a deep packet inspector on host computer 104 to perform a deep packet inspection of the data message or its flow in order to identify the type of traffic carried in the data message or its flow.

Based on the data message's attributes, the process selects a path for the data message in some examples that is optimal from a perspective of one or more metrics, such as cost, delay, latency, loss etc. In some examples, the process performs the classification operation (at 410) by comparing one or more attributes of the data message (e.g., the data message's 5-tuple identifier and/or associated contextual attributes) with identifiers of several path-defining rules stored in a rule storage. Each rule specifies a path through a network, which in some examples are specified as IP addresses of hops along the path. Hence, after matching the data message's attributes to a set of identifiers of a rule, the process selects the path specified by the rule as the path for the data message.

It should be noted that the process 400 allows two different tenants of a multi-tenant network to optimize their traffic-engineered paths different. For instance, for two data message flows of two tenants that carry the same type of traffic (i.e., the same type of payload content) between the same source and destination computers (on which at least one source or destination machine of each tenant executes), the process 400 can select two different paths. This can occur because one tenant might wish to use a faster, lower-latency path for that type of content, while the other tenant might wish for a less expensive path for that type of content. To implement this, some examples define different path-selection rules for different tenants, while other examples use the tenant identifier as one of the attributes for performing the path-selection classification operation.

After identifying (at 410) the path for the data message, the process 400 embeds (at 415) the identified path in an option TLV 220 of a Geneve tunnel header 200 that it will use to encapsulate the received data message. As described above, the option TLV stores the path in terms of the IP addresses of the hops along the path. Also, as further described above, the option TLV stores these IP addresses in reverse order, with the first hop's address appearing last in the list while the last hop's address appears first in the list.

In the option TLV, the process also stores (at 415) the next hop value. The process sets this value to identify the last network address in the path hop list, which is the address of the first hop. The next hop index value is used to identify the embedded network address of the"next" hop, and subsequent hops use this index in some examples to identify the next hop along the path. At 415, the process 400 also embeds in the base header 215 of the Geneve tunnel header the VNI of the tenant associated with the source GVM that sent the received data message. The embedding of the VNI allows the same set of tunnels to be used to forward data messages for different tenants.

Next, at 420, the process configures other parts of the Geneve tunnel header. For instance, the process stores in the outer portion header 205 of the tunnel header 200 the L2 and L3 network addresses of its VTEP (e.g., a VTEP associated with its SFE) and the VTEP of the first hop as the source and destination network addresses. At 420, the process defines the UDP protocol in the Geneve tunnel header, and sets any other fields that need to be define, per the discussion above and the tunnel deployment configuration being used.

After finalizing the tunnel header configuration (at 420), the process passes (at 425) the encapsulated data message along a Geneve tunnel to the first hop (e.g., hop 122) along the selected path. To send this data message, the process in some examples resolves the IP address of the first hop to the tunnel that connects the ingress hop to the first hop. After 420, the process ends.

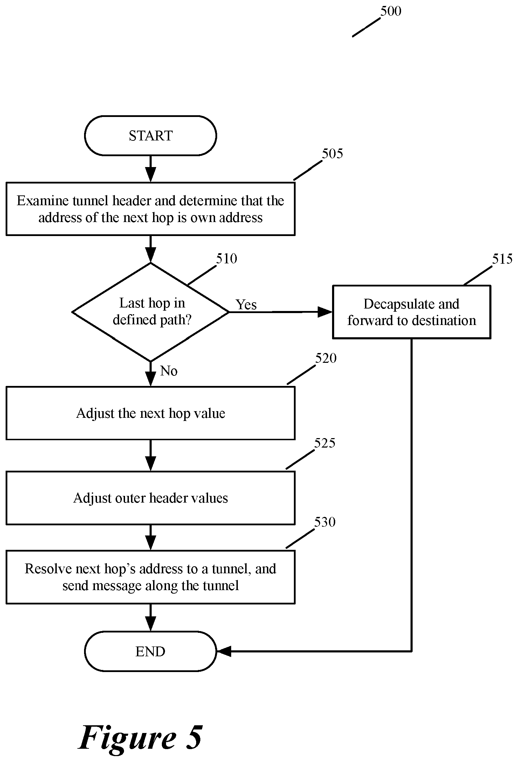

Figure 5 illustrates a process 500 that a hop performs when it receives a Geneve-encapsulated data message. In some examples, this hop executes on a host computer along with one or more tenant machines (e.g., GVMs). As shown, the process inspects (at 505) the tunnel header and determines that the received data message is addressed to it. The hop makes this determination in some examples by extracting the next hop index from the tunnel, using this index to retrieve the network address of the next hop along the path, and then determining that this address is the IP address of its own.

Once the process 500 determines (at 505) that the received data message is addressed to it, the process determines whether it is the last hop in the path embedded in the tunnel header. In some examples, this would be the case when the next hop index is at is lowest value (e.g., it is 0 or 1, depending on which is defined as the lowest value), which is indicative that the last hop has been reached. When the process 500 determines (at 510) that it is the last hop in the embedded path, it removes the tunnel header (i.e., decapsulates the encapsulated tunnel header), and forwards the data message to the destination machine identified by the destination network address identified in the received data message's original header (e.g., header 130).

In some examples, the process 500 is performed by a path-processing filter that executes on the same host computer as the destination machine. A port of a SFE executing on the host computer in some examples passes the encapsulated data message to the path processing filter. In these examples, the path-processing filter passes the decapsulated data message back to the SFE port (e.g., passes a handle to this message to this part) and the SFE port processes, or has the SFE process, this message so that it can be forwarded to the destination machine (e.g., the destination GVM or container) executing on the same host computer. In some examples, the egress hop connects to the data message's destination (e.g., destination computer, virtual machine or container) through an intervening fabric (i.e., through intervening routers/switches). In these cases, the egress hop forwards the data message through the intervening fabric to the data message's destination.

When the process 500 determines (at 510) that it is not the last hop in the embedded path, the process adjusts (at 520) the next hop index value in the tunnel header of the received encapsulated message, in order to identify the next hop in the path identified by the embedded path information. As mentioned above, the process adjusts the next hop index value in some examples by decrementing this value as the path is specified in the tunnel header by a reverse ordered list of hop IP addresses.

Next, at 525, the process adjusts the outer header values of the tunnel header to identify its own IP address as the source IP address of the encapsulated message, and the IP address of the next hop (now identified by the adjusted next hop index value) as the destination IP address of the encapsulated message. At 530, the process resolves the next hop's address to a tunnel between the current hop and the next hop, and sends the encapsulated data message along this tunnel to the next hop. Before sending the encapsulated data message along the resolved tunnel, the process 500 in some examples adjusts (at 530) one or more parameters in the data message's tunnel header (e.g., option, ID or other attributes of the next tunnel) to reflect new attributes and/or identity of the new tunnel along which the data message will get sent. After 530, the process ends.

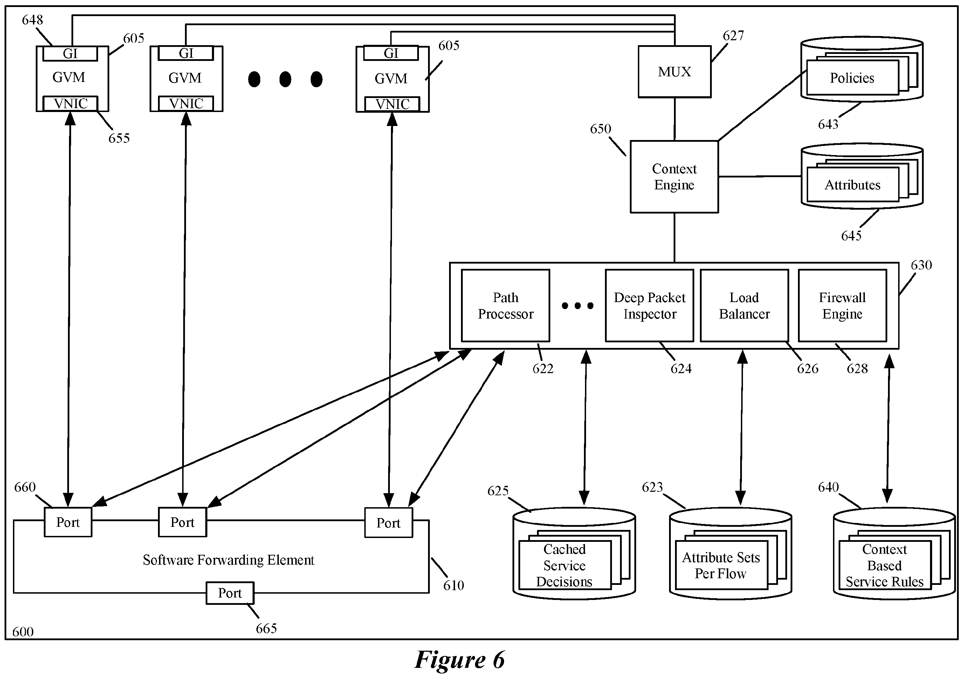

Figure 6 illustrates a host computer 600 that is used in some examples to execute the GVMs, hop-processing forwarding element and path-processing filter of some examples. This host computer also executes service engines that perform context-rich, attribute-based services in a datacenter. The host computer 600 includes several GVM 605, a software forwarding element 610, a context engine 650, service engines 630, context-based service rule storage 640, context-attribute storage 645, an attribute-mapping storage 623, a connection state cache storage 625, a MUX (multiplexer) 627, and a context-engine policy storage 643. The service engines 630 include a path processor 622, a deep packet inspector 624, a load balancer 626, a firewall engine 628, and one or more other service engines (not shown).

In Figure 6, the GVMs 605 execute on a hypervisor. In some examples, the context engine 650, the software forwarding element 610, the service engines 630, the context-based service rule storages 640, the connection state cache storage 625, the context-engine policy storage 643, and the MUX 627 operate in the kernel space of the hypervisor, while the VMs 605 operate in the hypervisor's user space. In other examples, one or more service engines and/or the context engine are user space modules (e.g., are service VMs).

In some examples, the GVMs 605 are tenant machines that serve as data end points for some or all tenant data message flows in the datacenter. Examples of such machines include webservers, application servers, database servers, etc. In some cases, all the VMs belong to one entity, e.g., an enterprise that operates the host. In other cases, the host 600 operates in a multi-tenant environment (e.g., in a multi -tenant data center), and different VMs 605 may belong to one tenant or to multiple tenants.

Each VM 605 includes a GI agent 648 that communicates with the context engine 650 to provide context attribute sets to this engine, and to receive instructions and queries from this engine. The communications between the context engine 650 and the GI agents 648 are relayed through the MUX 627. One example of such a mux is the mux that is used by the Endpoint Security (EPSec) platform of ESX hypervisors of VMware, Inc. In some examples, the attributes collected by the context engine 650 from the GI agents 650 include a rich group of parameters (e.g., layer 7 parameters, process identifiers, user identifiers, group identifiers, etc.). U.S. Patent Application 15/650,251, filed July 14, 2017, further describes the capturing and use of these contextual attributes through the GI agent 648.

As shown, each GVM 605 includes a virtual network interface card (VNIC) 655 in some examples. Each VNIC is responsible for exchanging messages between its VM and the SFE 610. Each VNIC connects to a particular port 660 of the SFE 610. The SFE 610 also connects to a physical network interface card (NIC) (not shown) of the host. In some examples, the VNICs are software abstractions created by the hypervisor of one or more physical NICs (PNICs) of the host.

In some examples, the SFE 610 maintains a single port 660 for each VNIC of each VM. The SFE 610 connects to the host PNIC (through a NIC driver (not shown)) to send outgoing messages and to receive incoming messages. In some examples, the SFE 610 is defined to include a port 665 that connects to the PNIC's driver to send and receive messages to and from the PNIC. The SFE 610 performs message-processing operations to forward messages that it receives on one of its ports to another one of its ports. For example, in some examples, the SFE tries to use data in the message (e.g., data in the message header) to match a message to flow based rules, and upon finding a match, to perform the action specified by the matching rule (e.g., to hand the message to one of its ports 660 or 665, which directs the message to be supplied to a destination VM or to the PNIC).

In some examples, the SFE 610 is a software switch, while in other examples it is a software router or a combined software switch/router. The SFE 610 in some examples implements one or more logical forwarding elements (e.g., logical switches or logical routers) with SFE executing on other hosts in a multi-host environment. A logical forwarding element in some examples can span multiple hosts to connect VMs that execute on different hosts but belong to one logical network.

Different logical forwarding elements can be defined to specify different logical networks for different users, and each logical forwarding element can be defined by multiple software forwarding elements on multiple hosts. Each logical forwarding element isolates the traffic of the VMs of one logical network from the VMs of another logical network that is serviced by another logical forwarding element. A logical forwarding element can connect VMs executing on the same host and/or different hosts. In some examples, the SFE extracts from a data message a logical network identifier (e.g., a VNI) and a MAC address. The SFE in these examples uses the extracted VNI to identify a logical port group, and then uses the MAC address to identify a port within the port group.

Software switches (e.g., software switches of hypervisors) are sometimes referred to as virtual switches because they operate in software and they provide the VMs with shared access to the PNIC(s) of the host. However, in this document, software switches are referred to as physical switches because they are items in the physical world. This terminology also differentiates software switches from logical switches, which are abstractions of the types of connections that are provided by the software switches. There are various mechanisms for creating logical switches from software switches. VXLAN provides one manner for creating such logical switches. The VXLAN standard is described in Mahalingam, Mallik; Dutt, Dinesh G.; et al. (2013-05-08), VXLAN: A Framework for Overlaying Virtualized Layer 6 Networks over Layer 3 Networks, IETF.

The ports of the SFE 610 in some examples include one or more function calls to one or more modules that implement special input/output (EO) operations on incoming and outgoing messages that are received at the ports. Examples of I/O operations that are implemented by the ports 660 include ARP broadcast suppression operations and DHCP broadcast suppression operations, as described in U.S. Patent 9,548,965. Other I/O operations (such as firewall operations, load-balancing operations, network address translation operations, etc.) can be so implemented in some examples . By implementing a stack of such function calls, the ports can implement a chain of I/O operations on incoming and/or outgoing messages in some examples. Also, in some examples, other modules in the data path (such as the VNICs 655, port 665, etc.) implement the I/O function call operations instead of, or in conjunction with, the ports 660.

In some examples, one or more of function calls of the SFE ports 660 can be to one or more service engines 630 that process service rules on the data message flows sent to and received for the GVMs. Some of these service rules are context-based service rules in the context-based service rule storages 640. Each service engine 630 in some examples has its own context-based service rule storage 640, attribute-mapping storage 623, and connection state cache storage 625. Figure 6 presents just one context-based service rule storage 640, attribute-mapping storage 623, and connection state cache storage 625 for all the service engines in order not to obscure the presentation in this figure with unnecessary detail. Also, in some examples, each VM can have its own instance of a service engine (e.g., its own instance of path processor 622, deep packet inspector 624, load balancer 626, and firewall engine 628). In other examples, one service engine can service data message flows for multiple VMs on a host (e.g., VMs for the same logical network).

To perform its service operation for a data message flow, a service engine 630 in some examples tries to match the flow identifier (e.g., the five-tuple identifier) and/or the flow's associated context attribute set to the rule identifiers of its service rules in its context-based service rule storage 640. Specifically, for a service engine 630 to perform its service check operation for a data message flow, the SFE port 660 that calls the service engine supplies a set of attributes of a message that the port receives. In some examples, the set of attributes are message identifiers, such as traditional five-tuple identifiers. In some examples, one or more of the identifier values can be logical values that are defined for a logical network (e.g., can be IP addresses defined in a logical address space). In other examples, all of the identifier values are defined in the physical domains. In still other examples, some of the identifier values are defined in the logical domain, while other identifier values are defined in the physical domain.

The service engine in some examples then uses the received message's attribute set (e.g., the message's five-tuple identifier) to identify the context attribute set that the service engine has stored for this flow in the attribute-mapping storage 623. The context engine 650 in some examples supplies the context attributes for new flows (i.e., new network connection events) to the service engines 630, along with a flow identifier (e.g., a five-tuple identifier). The context-engine policy storage 643 contains the rules that control the operation of the context engine 650. In some examples, these policies direct the context engine to generate rules for the service engines or to direct the service engines to generate rules. The service engines 630 in these examples store the context attributes that they receive from the context engine in the attribute-mapping storage 623.

In some examples, a service engine 630 stores the context attribute set for each new flow with that flow's identifier (e.g., five-tuple identifier) in the attribute-mapping storage. In this manner, the service engine can identify the context attribute set for each new flow that it receives from the SFE ports 660 by searching its attribute-mapping storage 623 for a context record that has a matching flow identifier. The context record with the matching flow identifier includes the context attribute set for this flow.

Some or all of the service engines in some examples pull the context attribute sets for a new flow from the context engine. For instance, in some examples, a service engine supplies a new flow's five-tuple identifier that it receives from the SFE port 660, to the context engine 650. This engine 650 then examines its attribute storage 645 to identify a set of attributes that is stored for this five-tuple identifier, and then supplies this attribute set (or a subset of it that it obtains by filtering the identified attribute set for the service engine) to the service engine.

Some examples implement the pull model by using a service token to encode the attribute set for a new message flow. When notified of a new network connection event, the context engine 650 in some examples (1) collects the context attribute set for the new event, (2) filters this set to discard the attributes that are not relevant for performing one or more services on the flow, (3) stores the remaining filtering attribute subset in the attribute storage 645 along with a service token, and (4) provides the service token to the GI agent 648. The GI agent 648 then causes this token to be passed to the service engine(s) in-band (e.g., in a header of the data message that the agent's VM sends to a destination) or out-of-band (i.e., separately from the data messages that the agent's VM sends to a destination).

When the service engine gets the new flow through the SFE port 660, it supplies this flow's service token to the context engine, which uses this service token to identify in its attribute storage 645 the context attributes to supply to the service engine. In the examples that the SFE port does not provide this service token to the service engine, the service engine first has to identify the service token by searching its data stores using the flow's identifier before supplying the service token to the context engine.

After identifying the contextual attribute set for a data message flow, the service engine 630 in some examples performs its service operation based on service rules that are stored in the context-based service rule storage 640. To perform its service operation, the service engine 630 matches the received attribute subset with corresponding attribute sets that are stored for the service rules. In some examples, each service rule in the context-based service rule storage 640 has a rule identifier and an action parameter set.

As mentioned above, the rule identifier of a service rule in some examples can be defined in terms of one or more contextual attributes that are not L2-L4 header parameters (e.g., are L7 parameters, user identifiers, group identifiers, process name, loaded module identifiers, consumption parameters, etc.). In some examples, a rule identifier can also include L2-L4 header parameters. Also, in some examples, one or more parameters in a rule identifier can be specified in terms of an individual value or a wildcard value. Also, in some examples, a rule identifier can include a set of individual values or a group identifier, such as a security group identifier, a compute construct identifier, a network construct identifier, etc.

To match a received attribute set with the rules, the service engine compares the received attribute set with the associated identifiers of the service rules stored in the context-based service rule storage 640. ETpon identifying a matching rule, the service engine 630 performs a service operation (e.g., a path processing operation, a firewall operation, a load balancing operation, an encryption operation, other middlebox operation, etc.), based on the action parameter set (e.g., based on the path hop list, Allow/Drop parameters, the load balancing criteria, encryption parameters, etc.) of the matching rule.

In some examples, the context-based service rule storage 640 is defined in a hierarchical manner to ensure that a message rule check will match a higher priority rule before matching a lower priority rule, when the message's attribute subset matches multiple rules. Also, in some examples, the context-based service rule storage 640 contains a default rule that specifies a default action for any message rule check that cannot identify any other service rules; this default rule will be a match for all possible attribute subsets in some examples, and ensures that the service rule engine will return an action for all received attribute subsets. In some examples, the default rule will specify no service.

Multiple messages can have the same message identifier attribute sets, e.g., when the messages are part of one flow that is associated with one communication session between two machines. Accordingly, after matching a data message with a service rule in the context-based service rule storage 640 based on the message's identified context attribute set, the service engine of some examples stores the service rule (or a reference to the service rule) in the connection state cache storage 625, so that it can later use this service rule for subsequent data messages of the same flow.

In some examples, the connection state cache storage 625 stores the service rule, or a reference to the service rule, that the service engine 630 identifies for different message identifier sets (e.g., for different five-tuple identifiers that identify different data message flows). In some examples, the connection state cache storage 625 stores each service rule, or reference to the service rule, with an identifier (e.g., a flow's five-tuple identifier) that is generated from the matching message identifier set.

Before checking with the context-based service rule storage 640 for a particular message, a service engine 630 of some examples checks the connection state cache storage 625 to determine whether this storage has previously identified a service rule for this message's flow. If not, the service engine 630 identifies the contextual attribute set for the message flow, and then checks the context-based service rule storage 640 for a service rule that matches the message's identified attribute set and/or its five-tuple identifier. When the connection state data storage has an entry for the particular message, the service engine performs its service operation (e.g., its path selection operation) based on this service rule's action parameter set (e.g., based on hop list identified by this service rule in the connection cache 625).

At each hop along a path, a hop path processor in some examples processes the path information embedded in the data message's tunnel header. On the host computer, the software forwarding element 610 is associated with the VTEP that serves as a Geneve tunnel endpoint in some examples. For an ingress hop (e.g., hop 120), the path processor performs the operations of the process 400 of Figure 4 in some examples. For a data message sent by a GVM 605 on its host computer, the path processor 622 selects an engineered path through the network for the data message to its destination based on the data message's attributes.

As mentioned above, these attributes can just include the message's flow identifier (e.g., five tuple identifier) in some cases, just include this message's captured contextual metadata in other cases, or can include both the message's flow identifier and captured contextual metadata. To select a path, the path processor in some examples matches the message's flow identifier and/or contextual metadata attributes with the rule identifier attributes of path-specifying rules of the path processor that are stored in the rule storage 640. In some examples, each path-specifying rule in the storage 640 specifies a path in terms of a list of IP addresses for the hops along the path.

In some examples, the captured context for a data message includes the traffic type for the data message's flow (i.e., the type of content carried in that flow). In some examples, the DPI engine 624 identifies this traffic type when an SFE port 660 calls the DPI engine for the data message and/or other data messages in the same flow. The DPI engine in some examples provides this traffic type to the context engine 650 to store in the attribute storage 645, so that the context engine 650 can subsequently provide the traffic type to the path processor 622 when this processor asks for this information for the data message (e.g., by providing the message's flow identifier attributes, or service token). In other examples, the context engine 650 pushes the traffic type for a flow to the attribute storage 623 (through the path processor 622 or another service engine) so that the path processor can later retrieve the flow's traffic type when processing a data message of the flow.

When the captured contextual attributes include the data message's traffic type, the ingress hop can select between two or more traffic-engineered paths to the data message's destination, when two or more such paths are previously defined and stored in the rule storage 640. For instance, as described above by reference to Figure 1, path 180 might be more optimal based on delay and/or latency considerations, while path 185 might be more optimal from a cost perspective. Hence, for a first data message flow between the GVMs 102 and 106 that carries video conference data for corporate executives, the path processor matches the data message flow's attributes to a path-specifying rule that identifies path 180 as the flow's path to the GVM 106. On the other hand, for a second data message flow between these two GVMs that carries chat message data between two non-executives, the path processor matches the data message flow's attributes to a path-specifying rule that identifies path 185 as the flow's path to the GVM 106.

After matching the message's attribute set with one of path-specifying rules, the path processor 622 of the ingress node embeds the path hop list of the of path-specifying rule in a Geneve tunnel header, along with other tunnel attributes described above (e.g., outer header parameters, next hop index, etc.). In some examples, the path processor 622 has another one of the service engines 630 perform the tunnel encapsulation. After encapsulating the data message with a Geneve tunnel header 200, the path processor returns the data message to the SFE (e.g., provides a handle for the location in memory at which the encapsulated data message is stored) so that the SFE can forward the data message along the Geneve tunnel to the hop associated with the first service machine in the specified path hop list.

When the path processor 622 is performing the operations of a non-ingress hop, the path processor performs the operations of the process 500 of Figure 5 in some examples. For instance, it determines that a tunnel encapsulated data message has a path hop list that identifies the IP address of its SFE VTEP as the address of the next hop.

Once the path processor 622 determines that the received data message is addressed to it, the processor determines whether it is the last hop in the path embedded in the tunnel header. In some examples, this would be the case when the next hop index identifies the current hop's address as the first address in the path hop address list (i.e., when the next hop index has its lowest value). When the path processor 622 determines that it is the last hop in the embedded path, it removes the tunnel header (i.e., decapsulates the encapsulated tunnel header), and passes the decapsulated data message back to the SFE port (e.g., passes a handle to this message to this part) and the SFE port processes, or has the SFE process, this message so that it can be forwarded to the destination machine (e.g., the destination GVM or container) executing on the same host computer. In some examples, the egress hop connects to the data message's destination (e.g., destination computer, virtual machine or container) through an intervening fabric (i.e., through intervening routers/switches). In these cases, the egress hop forwards the data message through the intervening fabric to the data message's destination.

When the path processor is not the last hop in the embedded path, the path processor adjusts the next hop index value in the tunnel header of the received encapsulated message, in order to identify the next hop in the path identified by the embedded path information. As mentioned above, the path processor adjusts the next hop index value in some examples by decrementing this value as the path is specified in the tunnel header by an reverse ordered list of hop IP addresses.

The path processor 622 adjusts the outer header values of the tunnel header to identify its hop's IP address as the source IP address of the encapsulated message, and the IP address of the next hop (now identified by the adjusted next hop index value) as the destination IP address of the encapsulated message. The path processor resolves the next hop's address to a tunnel between the current hop and the next hop. Before sending the encapsulated data message along the resolved tunnel, the path processor in some examples adjusts one or more parameters in the data message's tunnel header to reflect the attributes and/or identity of the new tunnel along which the data message will get sent. It then provides the encapsulated data message to its SFE to forward long a tunnel to the next hop.

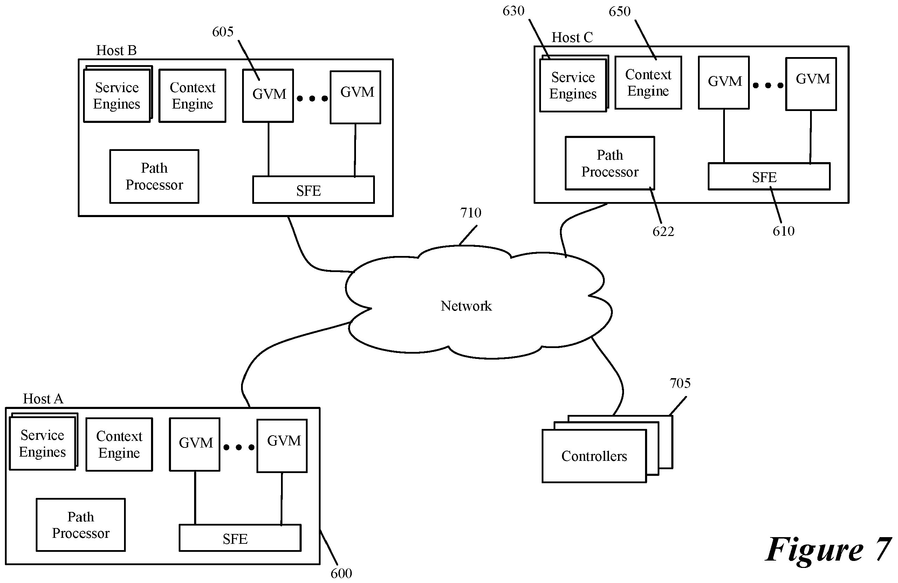

Figure 7 illustrates an example of how the path-processing filters 622 are managed in some examples. This figure illustrates multiple hosts 600 in a datacenter. As shown, each host includes several service engines 630, a context engine 650, a path-processing filter 622, several GVMs 605, and an SFE 610. It also illustrates a set of controllers 705 for managing the path-processing filters 622 and the service engines 630, GVMs 605, and SFEs 610. The hosts and controllers communicatively connect to each other through a network 710, which can be a local area network, a wide area network, a network of networks (such as the Internet), etc.

The controller set provides a user interface for the administrators to define context-based service rules in terms of contextual attributes, and communicates with the hosts through the network 710 to provide these policies. In some examples, the context engines 650 collect contextual attributes that are passed to management servers in the controller set through a network 710 so that these contextual attributes can be used to define policies. The management servers in some examples interact with discovery engines executing on the host computers 600 in the datacenter to obtain and refresh inventory of all processes and services that are running on the GVMs on the hosts. The management plane in some examples then provides a rule creation interface for allowing administrators to create context-based service rules for the service engines and the path processors 622.

Once the high-level service policies are defined in the management plane, the management plane directly supplies some or all of these policies to the management proxies (not shown) on the hosts 600, and/or indirectly supplies some or all of these policies to these proxies through a set of configuring controllers. In some examples, the management proxies publish the received policies as rules to the context-based service rule storages 640. In some examples, the proxies transform these policies before publishing them to the context-based service rule storages 640. Also, the context engines 650 on the hosts 600 in some examples resolve the policies based on collected contextual attributes, in order to generate rules for the service engines.

In some examples, different policies are specified for different data message flows from a source GVM based on different traffic content carried by these flows. For instance, one policy might define a path hop list that use low-latency path for a data message flow between two GVMs that is for a video conference involving the executive staff of a corporation, while another policy might define a path hop list that uses low cost path for a data message flow from the same two GVMs when this message flow pertains to a chat between two non executives.

Many of the above-described features and applications are implemented as software processes that are specified as a set of instructions recorded on a computer readable storage medium (also referred to as computer readable medium). When these instructions are executed by one or more processing unit(s) (e.g., one or more processors, cores of processors, or other processing units), they cause the processing unit(s) to perform the actions indicated in the instructions. Examples of computer readable media include, but are not limited to, CD-ROMs, flash drives, RAM chips, hard drives, EPROMs, etc. The computer readable media does not include carrier waves and electronic signals passing wirelessly or over wired connections.

In this specification, the term"software" is meant to include firmware residing in read-only memory or applications stored in magnetic storage, which can be read into memory for processing by a processor. Also, in some examples, multiple software inventions can be implemented as sub-parts of a larger program while remaining distinct software inventions. In some examples, multiple software inventions can also be implemented as separate programs. Finally, any combination of separate programs that together implement a software invention described here is within the scope of the invention. In some examples, the software programs, when installed to operate on one or more electronic systems, define one or more specific machine implementations that execute and perform the operations of the software programs.

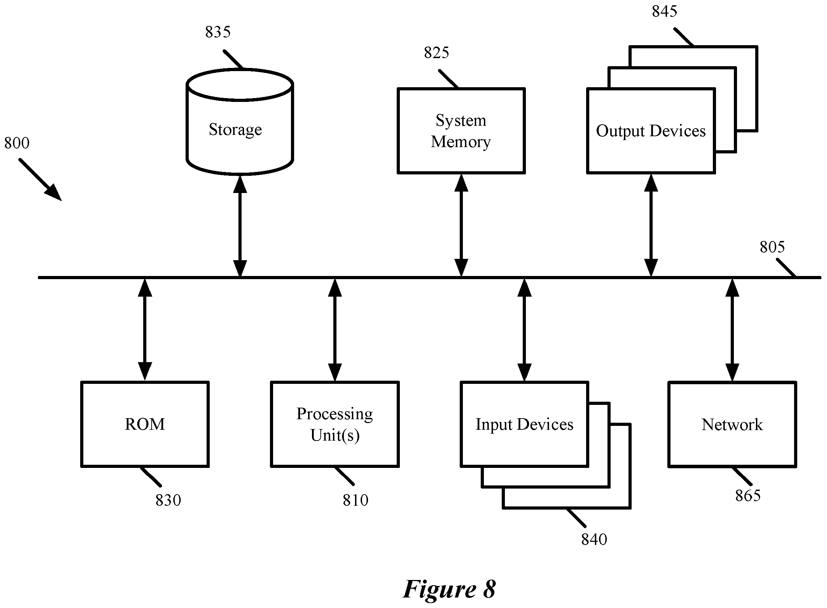

Figure 8 conceptually illustrates a computer system 800 with which some examples are implemented. The computer system 800 can be used to implement any of the above-described hosts, controllers, and managers. As such, it can be used to execute any of the above described processes. This computer system includes various types of non-transitory machine readable media and interfaces for various other types of machine readable media. Computer system 800 includes a bus 805, processing unit(s) 810, a system memory 825, a read-only memory 830, a permanent storage device 835, input devices 840, and output devices 845.

The bus 805 collectively represents all system, peripheral, and chipset buses that communicatively connect the numerous internal devices of the computer system 800. For instance, the bus 805 communicatively connects the processing unit(s) 810 with the read-only memory 830, the system memory 825, and the permanent storage device 835.

From these various memory units, the processing unit(s) 810 retrieve instructions to execute and data to process in order to execute the processes described herein. The processing unit(s) may be a single processor or a multi-core processor in different examples. The read-only-memory (ROM) 830 stores static data and instructions that are needed by the processing unit(s) 810 and other modules of the computer system. The permanent storage device 835, on the other hand, is a read-and-write memory device. This device is a non-volatile memory unit that stores instructions and data even when the computer system 800 is off. Some examples use a mass-storage device (such as a magnetic or optical disk and its corresponding disk drive) as the permanent storage device 835.

Other examples use a removable storage device (such as a flash drive, etc.) as the permanent storage device. Like the permanent storage device 835, the system memory 825 is a read-and-write memory device. However, unlike storage device 835, the system memory is a volatile read-and-write memory, such a random access memory. The system memory stores some of the instructions and data that the processor needs at runtime. In some examples, the processes are stored in the system memory 825, the permanent storage device 835, and/or the read-only memory 830. From these various memory units, the processing unit(s) 810 retrieve instructions to execute and data to process in order to execute the processes of some examples.

The bus 805 also connects to the input and output devices 840 and 845. The input devices enable the user to communicate information and select commands to the computer system. The input devices 840 include alphanumeric keyboards and pointing devices (also called "cursor control devices"). The output devices 845 display images generated by the computer system. The output devices include printers and display devices, such as cathode ray tubes (CRT) or liquid crystal displays (LCD). Some examples include devices such as a touchscreen that function as both input and output devices.

Finally, as shown in Figure 8, bus 805 also couples computer system 800 to a network 865 through a network adapter (not shown). In this manner, the computer can be a part of a network of computers (such as a local area network ("LAN"), a wide area network ("WAN"), or an Intranet, or a network of networks, such as the Internet. Any or all components of computer system 800 may be used in conjunction with the examples.

Some examples include electronic components, such as microprocessors, storage and memory that store computer program instructions in a machine-readable or computer-readable medium (alternatively referred to as computer-readable storage media, machine-readable media, or machine-readable storage media). Some examples of such computer-readable media include RAM, ROM, read-only compact discs (CD-ROM), recordable compact discs (CD-R), rewritable compact discs (CD-RW), read-only digital versatile discs (e.g., DVD-ROM, dual-layer DVD-ROM), a variety of recordable/rewritable DVDs (e.g., DVD-RAM, DVD-RW, DVD+RW, etc.), flash memory (e.g., SD cards, mini-SD cards, micro-SD cards, etc.), magnetic and/or solid state hard drives, read-only and recordable Blu-Ray^{®} discs, ultra-density optical discs, and any other optical or magnetic media. The computer-readable media may store a computer program that is executable by at least one processing unit and includes sets of instructions for performing various operations. Examples of computer programs or computer code include machine code, such as is produced by a compiler, and files including higher-level code that are executed by a computer, an electronic component, or a microprocessor using an interpreter.

While the above discussion primarily refers to microprocessor or multi-core processors that execute software, some examples are performed by one or more integrated circuits, such as application specific integrated circuits (ASICs) or field programmable gate arrays (FPGAs). In some examples, such integrated circuits execute instructions that are stored on the circuit itself.

As used in this specification, the terms "computer", "server", "processor", and "memory" all refer to electronic or other technological devices. These terms exclude people or groups of people. For the purposes of the specification, the terms display or displaying means displaying on an electronic device. As used in this specification, the terms "computer readable medium," "computer readable media," and "machine readable medium" are entirely restricted to tangible, physical objects that store information in a form that is readable by a computer. These terms exclude any wireless signals, wired download signals, and any other ephemeral or transitory signals.

The above-described methodology is used in some examples to express path information in single tenant environments. Thus, one of ordinary skill will realize that some examples of the invention are equally applicable to single tenant datacenters. Conversely, in some examples, the above-described methodology is used to carry path information across different datacenters of different datacenter providers when one entity (e.g., one corporation) is a tenant in multiple different datacenters of different providers. In these examples, the tenant identifiers that are embedded in the tunnel headers have to be unique across the datacenters, or have to be translated when they traverse from one datacenter to the next. Thus, one of ordinary skill in the art would understand that the invention is not to be limited by the foregoing illustrative details, but rather is to be defined by the appended claims.

## Claims

1. A method of specifying a path (180, 185) for a data message flow through a network (710) comprising a plurality of forwarding elements (120-128), the method comprising:
at a host computer (104, 600) executing a source machine (102) sending the data message flow (100):
using a set of attributes associated with the data message flow to identify one path-defining rule from a plurality of path-defining rules (640) each of which (i) is stored on the host computer (104, 600) and (ii) specifies a different candidate path from a plurality of candidate paths (180, 185) for the data message flow through the network to a destination (106) of the data message flow, the identified path-defining rule (640) specifying a candidate first path (180, 185) by reference to a plurality of forwarding-element internet protocol (IP) addresses of the plurality of forwarding elements (120-128) on the candidate first path (180, 185);
with an outer tunnel header (140, 200) that is placed outside of layers 2, 3, and 4 headers (130) of each data message (100) of the flow, encapsulating each data message (100) in the flow, each outer tunnel header storing (140, 200) the plurality of forwarding-element IP addresses identifying the plurality of forwarding elements (122-128) on the candidate first path (180, 185) specified by the identified path-defining rule (640); and
forwarding the encapsulated data messages along the candidate first path (180, 185) specified by the identified path-defining rule (640).

2. The method of claim 1, wherein the tunnel headers (140, 200) are based on a tunneling protocol that allows the tunnel headers (140, 200) to have a variable size (220).

3. The method of claim 1, wherein the network is a multi -tenant network (710) and the data message flow is associated with a particular tenant, the method further comprising embedding a tenant identifier (335) identifying the particular tenant in the tunnel headers (140, 200), said embedded tenant identifier (335) allowing multiple different tenants to use a same set of tunnels (150-158) between the forwarding elements (120-128).

4. The method of claim 3, wherein each tunnel header (140, 200) comprises a base tunnel header (215) to store the tenant identifier (335), and an option header (220) to store the plurality of forwarding-element IP addresses.

5. The method of claim 1, wherein
the specified candidate first path (180, 185) traverses through the plurality of forwarding elements (120-128) based on a particular sequence; and
an outer portion (205) of each tunnel header (140, 200) comprises a destination network address that is a network address of a forwarding element (120-128) that is a first forwarding element in the particular sequence.

6. The method of claim 5, wherein at each subsequent forwarding element (120-128) in the specified candidate first path (180, 185) that is not the last forwarding element in the specified candidate first path (180, 185), the forwarding element (122-126) processes a received encapsulated data message (100) by:
identifying the next forwarding-element IP address in the plurality of forwarding-element IP addresses (220) to identify the next forwarding element (124, 128) along the specified candidate first path (180, 185);
identifying a tunnel to the next forwarding element; and
adjusting the tunnel header (140, 200) of the encapsulated data message (100) for forwarding along the identified tunnel, said adjusting comprising adjusting the outer portion (205) of the tunnel header (140, 200) to include a network address of the next forwarding element as the destination network address.

7. The method of claim 6, wherein the tunnel headers (140, 200) include a next hop index value (220) that identifies the next forwarding element (120-128, 610) in the specified candidate first path (180, 185), and each subsequent forwarding element (120-128, 610) that is not the last forwarding element uses the next hop index value (220) to identify the next forwarding element (120-128, 610) in the specified candidate first path (180, 185).

8. The method of claim 1, wherein the set of attributes (645) comprises attributes other than layer 2 to layer 4 header values of the data message flow (100).

9. The method of claim 6, wherein an inner portion (220) of each tunnel header (140, 200) stores the plurality of forwarding element IP addresses and a next forwarding-element IP address that (i) identifies a next hop forwarding element IP address of a next hop forwarding element along the candidate first path and (ii) is adjusted by each subsequent forwarding element in the specified candidate first path to identify the next hop forwarding element IP address without removing any forwarding element IP address from the set of forwarding element IP addresses stored in the inner portion.

10. The method of claim 1, wherein the tunnel header is a Geneve tunnel header.

11. The method of claim 1, wherein the method is performed by a path processor executing on the host computer.

12. A machine-readable medium storing a program which when executed by at least one processing unit executes the method of any of claims 1-11.

13. A computer comprising:
a set of processing units; and
a machine-readable medium storing a program which when executed by at least one of the processing units executes the method of any of claims 1-11.

14. A system comprising:
a network comprising a plurality of forwarding elements (122-128);
a host computer (104, 600); and
a source machine (102);
wherein the source machine (102) is configured to:
execute on the host computer (104, 600); and
send a data message flow (100) to a destination; and
wherein the host computer (104, 600) is configured to:
use a set of attributes associated with the data message flow to identify one path-defining rule from a plurality of path-defining rules (640) each of which (i) is stored on the host computer (104, 600) and (ii) specifies a different candidate path from a plurality of candidate paths (180, 185) for the data message flow through the network to a destination (106) of the data message flow, the identified path-defining rule (640) specifying a candidate first path (180, 185) by reference to a plurality of forwarding-element IP addresses of the plurality of forwarding elements (120-128) on the candidate first path (180, 185);
with an outer tunnel header (140, 200) that is placed outside of layers 2, 3, and 4 headers (130) of each data message (100) of the flow, encapsulate each data message (100) in the flow, each outer tunnel header storing (140, 200) the plurality of forwarding-element IP addresses identifying the plurality of forwarding elements (122-128) on the candidate first path (180, 185) specified by the identified path-defining rule (640); and
forward the encapsulated data messages along the candidate first path (180, 185) specified by the identified path-defining rule (640).

## Patentansprüche

1. Verfahren zum Spezifizieren eines Pfades (180, 185) für einen Datennachrichtenfluss durch ein Netzwerk (710), das eine Mehrzahl von Weiterleitungselementen (120-128) aufweist, wobei das Verfahren Folgendes aufweist:
bei einem Host-Computer (104, 600), der eine Quellmaschine (102) ausführt, die den Datennachrichtenfluss (100) sendet:
Verwenden eines Satzes von Attributen, die mit dem Datennachrichtenfluss verbunden sind, um eine Pfaddefinitionsregel aus einer Vielzahl von Pfaddefinitionsregeln (640) zu identifizieren, von denen jede (i) auf dem Host-Computer (104, 600) gespeichert ist und (ii) einen anderen Kandidatenpfad aus einer Vielzahl von Kandidatenpfaden (180, 185) für den Datennachrichtenfluss durch das Netzwerk zu einem Ziel (106) des Datennachrichtenflusses spezifiziert, wobei die identifizierte Pfaddefinitionsregel (640) einen ersten Kandidatenpfad (180, 185) durch Bezugnahme auf eine Vielzahl von Weiterleitungselement-Internetprotokoll (IP)-Adressen der Vielzahl von Weiterleitungselementen (120-128) auf dem ersten Kandidatenpfad (180, 185) spezifiziert;
mit einem äußeren Tunnelkopf (140, 200), der außerhalb von Köpfen (130) der Schichten 2, 3 und 4 jeder Datennachricht (100) des Flusses platziert ist, Einkapseln jeder Datennachricht (100) in dem Fluss, wobei jeder äußere Tunnelkopf (140, 200) die Mehrzahl von Weiterleitungselement-IP-Adressen speichert, die die Mehrzahl von Weiterleitungselementen (122-128) auf dem durch die identifizierte Pfaddefinitionsregel (640) spezifizierten ersten Pfad (180, 185) identifizieren; und
Weiterleiten der eingekapselten Datennachrichten entlang des durch die identifizierte Pfaddefinitionsregel (640) spezifizierten ersten Kandidatenpfades (180, 185).

2. Verfahren nach Anspruch 1, wobei die Tunnelköpfe (140, 200) auf einem Tunnelprotokoll basieren, das es den Tunnelköpfen (140, 200) erlaubt, eine variable Größe (220) zu haben.

3. Verfahren nach Anspruch 1, wobei das Netzwerk ein Multi-Tenant-Netzwerk (710) ist und der Datennachrichtenfluss mit einem bestimmten Tenant assoziiert wird, wobei das Verfahren ferner ein Einbetten eines Tenant-Identifizierers (335) aufweist, der den bestimmten Tenant in den Tunnelköpfen (140, 200) identifiziert, wobei der eingebettete Tenant-Identifizierer (335) es mehreren verschiedenen Tenants ermöglicht, einen gleichen Satz von Tunneln (150-158) zwischen den Weiterleitungselementen (120-128) zu verwenden.

4. Verfahren nach Anspruch 3, wobei jeder Tunnelkopf (140, 200) einen Basistunnelkopf (215) zum Speichern des Tenant-Identifizierers (335) und einen Optionskopf (220) zum Speichern der mehreren Weiterleitungselement-IP-Adressen der aufweist.

5. Verfahren nach Anspruch 1, wobei
der spezifizierte erste Kandidatenpfad (180, 185) die Vielzahl von Weiterleitungselementen (120-128) auf der Grundlage einer bestimmten Sequenz durchläuft; und
ein äußerer Teil (205) jedes Tunnelkopfes (140, 200) eine Zielnetzwerkadresse aufweist, die eine Netzwerkadresse eines Weiterleitungselements (120-128) ist, das ein erstes Weiterleitungselement in der bestimmten Sequenz ist.

6. Verfahren nach Anspruch 5, wobei bei jedem nachfolgenden Weiterleitungselement (120-128) in dem spezifizierten ersten Kandidatenpfad (180, 185), das nicht das letzte Weiterleitungselement in dem spezifizierten ersten Kandidatenpfad (180, 185) ist, das Weiterleitungselement (122-126) eine empfangene eingekapselte Datennachricht (100) verarbeitet, durch:
Identifizieren der nächsten Weiterleitungselement-IP-Adresse in der Vielzahl von Weiterleitungselement-IP-Adressen (220), um das nächste Weiterleitungselement (124, 128) entlang des spezifizierten ersten Kandidatenpfades (180, 185) zu identifizieren;
Identifizieren eines Tunnels zu dem nächsten Weiterleitungselement; und
Anpassen des Tunnelkopfes (140, 200) der eingekapselten Datennachricht (100) zum Weiterleiten entlang des identifizierten Tunnels, wobei das Anpassen ein Anpassen des äußeren Teils (205) des Tunnelkopfes (140, 200) aufweist, um eine Netzwerkadresse des nächsten Weiterleitungselements als die Zielnetzwerkadresse einzuschließen.

7. Verfahren nach Anspruch 6, wobei die Tunnelköpfe (140, 200) einen Indexwert (220) für den nächsten Sprung enthalten, der das nächste Weiterleitungselement (120-128, 610) in dem spezifizierten ersten Kandidatenpfad (180, 185) identifiziert, und jedes nachfolgende Weiterleitungselement (120-128, 610), das nicht das letzte Weiterleitungselement ist, den Indexwert (220) für den nächsten Sprung verwendet, um das nächste Weiterleitungselement (120-128, 610) in dem spezifizierten ersten Kandidatenpfad (180, 185) zu identifizieren.

8. Verfahren nach Anspruch 1, wobei der Satz von Attributen (645) andere Attribute als Kopfwerte der Schichten 2 bis 4 des Datennachrichtenflusses (100) aufweist.

9. Verfahren nach Anspruch 6, wobei ein innerer Abschnitt (220) jedes Tunnelkopfes (140, 200) die Mehrzahl von Weiterleitungselement-IP-Adressen und eine nächste Weiterleitungselement-IP-Adresse speichert, die (i) eine Weiterleitungselement-IP-Adresse des nächsten Sprungs eines Weiterleitungselements des nächsten Sprungs entlang des ersten Kandidatenpfads identifiziert und (ii) durch jedes nachfolgende Weiterleitungselement in dem spezifizierten ersten Kandidatenpfad angepasst wird, um die Weiterleitungselement-IP-Adresse des nächsten Sprungs zu identifizieren, ohne irgendeine Weiterleitungselement-IP-Adresse aus dem Satz von Weiterleitungselement-IP-Adressen zu entfernen, die in dem inneren Abschnitt gespeichert sind.

10. Verfahren nach Anspruch 1, wobei der Tunnelkopf ein Geneve-Tunnelkopf ist.

11. Verfahren nach Anspruch 1, wobei das Verfahren von einem Pfadprozessor durchgeführt wird, der auf dem Host-Computer ausgeführt wird.

12. Maschinenlesbares Medium, das ein Programm speichert, das, wenn es von mindestens einer Verarbeitungseinheit ausgeführt wird, das Verfahren nach einem der Ansprüche 1 bis 11 ausführt.

13. Computer, der Folgendes aufweist:
einen Satz von Verarbeitungseinheiten; und
ein maschinenlesbares Medium, das ein Programm speichert, das, wenn es von mindestens einer der Verarbeitungseinheiten ausgeführt wird, das Verfahren nach einem der Ansprüche 1-11 ausführt.

14. System, das Folgendes aufweist:
ein Netzwerk mit einer Vielzahl von Weiterleitungselementen (122-128);
einen Host-Computer (104, 600); und
eine Quellmaschine (102);
wobei die Quellmaschine (102) dazu konfiguriert ist:
auf dem Host-Computer (104, 600) ausgeführt zu werden; und
einen Datennachrichtenfluss (100) an ein Ziel zu senden; und
wobei der Host-Computer (104, 600) dazu konfiguriert ist:
einen Satz von Attributen zu verwenden, die mit dem Datennachrichtenfluss verbunden sind, um eine Pfaddefinitionsregel aus einer Vielzahl von Pfaddefinitionsregeln (640) zu identifizieren, von denen jede (i) auf dem Host-Computer (104, 600) gespeichert ist und (ii) einen anderen Kandidatenpfad aus einer Vielzahl von Kandidatenpfaden (180, 185) für den Datennachrichtenfluss durch das Netzwerk zu einem Ziel (106) des Datennachrichtenflusses zu spezifizieren, wobei die identifizierte Pfaddefinitionsregel (640) einen ersten Kandidatenpfad (180, 185) durch Bezugnahme auf eine Vielzahl von Weiterleitungselement-IP-Adressen der Vielzahl von Weiterleitungselementen (120-128) auf dem ersten Kandidatenpfad (180, 185) spezifiziert;
mit einem äußeren Tunnelkopf (140, 200), der außerhalb von Köpfen (130) der Schichten 2, 3 und 4 jeder Datennachricht (100) des Flusses platziert ist, jede Datennachricht (100) in dem Fluss einzukapseln, wobei jeder äußere Tunnelkopf (140, 200) die Mehrzahl von Weiterleitungselement-IP-Adressen speichert, die die Mehrzahl von Weiterleitungselementen (122-128) auf dem durch die identifizierte Pfaddefinitionsregel (640) spezifizierten ersten Kandidatenpfad (180, 185) identifizieren; und
die eingekapselten Datennachrichten entlang des durch die identifizierte Pfaddefinitionsregel (640) spezifizierten ersten Kandidatenpfades (180, 185) weiterzuleiten.

## Revendications

1. Procédé de spécification d'un trajet (180, 185) pour un flux de messages de données à travers un réseau (710) comprenant une pluralité d'éléments de transfert (120-128), le procédé comprenant les étapes consistant à :
sur un ordinateur hôte (104, 600) exécutant une machine source (102), envoyer le flux de messages de données (100) :
utiliser un ensemble d'attributs associés au flux de messages de données pour identifier une règle de définition de trajet parmi une pluralité de règles de définition de trajet (640) dont chacune (i) est stockée sur l'ordinateur hôte (104, 600) et (ii) spécifie un trajet candidat différent parmi une pluralité de trajets candidats (180, 185) pour le flux de messages de données à travers le réseau vers une destination (106) du flux de messages de données, la règle de définition de trajet identifiée (640) spécifiant un premier trajet candidat (180, 185) par référence à une pluralité d'adresses de protocole Internet (IP) d'élément de transfert de la pluralité d'éléments de transfert (120-128) sur le premier trajet candidat (180, 185) ;
avec un en-tête de tunnel externe (140, 200) qui est placé à l'extérieur des couches 2, 3 et 4 d'en-têtes (130) de chaque message de données (100) du flux, encapsuler chaque message de données (100) dans le flux, chaque en-tête de tunnel externe (140, 200) stockant la pluralité d'adresses IP d'élément de transfert identifiant la pluralité d'éléments de transfert (122-128) sur le premier trajet candidat (180, 185) spécifié par la règle de définition de trajet identifiée (640) ; et
transmettre les messages de données encapsulés le long du premier trajet candidat (180, 185) spécifié par la règle de définition de trajet identifiée (640).

2. Procédé selon la revendication 1, dans lequel les en-têtes de tunnel (140, 200) sont basés sur un protocole de tunnelisation qui permet aux en-têtes de tunnel (140, 200) d'avoir une taille variable (220).

3. Procédé selon la revendication 1, dans lequel le réseau est un réseau multi-locataire (710) et le flux de messages de données est associé à un locataire particulier, le procédé comprenant en outre l'incorporation d'un identifiant de locataire (335) identifiant le locataire particulier dans les en-têtes de tunnel (140, 200), ledit identifiant de locataire incorporé (335) permettant à plusieurs locataires différents d'utiliser un même ensemble de tunnels (150-158) entre les éléments de transfert (120-128).

4. Procédé selon la revendication 3, dans lequel chaque en-tête de tunnel (140, 200) comprend un en-tête de tunnel de base (215) pour stocker l'identifiant de locataire (335), et un en-tête d'option (220) pour stocker la pluralité d'adresses IP d'élément de transfert.

5. Procédé selon la revendication 1, dans lequel
le premier trajet candidat spécifié (180, 185) traverse la pluralité d'éléments de transfert (120-128) sur la base d'une séquence particulière ; et
une partie externe (205) de chaque en-tête de tunnel (140, 200) comprend une adresse de réseau de destination qui est une adresse de réseau d'un élément de transfert (120-128) qui est un premier élément de transfert dans la séquence particulière.

6. Procédé selon la revendication 5, dans lequel au niveau de chaque élément de transfert ultérieur (120128) dans le premier trajet de candidat spécifié (180, 185) qui n'est pas le dernier élément de transfert dans le premier trajet de candidat spécifié (180, 185), l'élément de transfert (122-126) traite un message de données encapsulé reçu (100) en :
identifiant l'adresse IP de l'élément de transfert suivant dans la pluralité d'adresses IP d'élément de transfert (220) pour identifier l'élément de transfert suivant (124, 128) le long du premier trajet candidat spécifié (180, 185) ;
identifiant un tunnel vers l'élément de transfert suivant ; et
ajustant l'en-tête de tunnel (140, 200) du message de données encapsulé (100) pour un transfert le long du tunnel identifié, ledit ajustement comprenant l'ajustement de la partie extérieure (205) de l'en-tête de tunnel (140, 200) pour inclure une adresse de réseau de l'élément de transfert suivant en tant qu'adresse de réseau de destination.

7. Procédé selon la revendication 6, dans lequel les en-têtes de tunnel (140, 200) comprennent une valeur d'indice de saut suivant (220) qui identifie l'élément de transfert suivant (120-128, 610) dans le premier trajet candidat spécifié (180, 185), et chaque élément de transfert suivant (120-128, 610) qui n'est pas le dernier élément de transfert utilise la valeur d'indice de saut suivant (220) pour identifier l'élément de transfert suivant (120-128, 610) dans le premier trajet candidat spécifié (180, 185).

8. Procédé selon la revendication 1, dans lequel l'ensemble d'attributs (645) comprend des attributs autres que des valeurs d'en-tête de couche 2 à couche 4 du flux de messages de données (100).

9. Procédé selon la revendication 6, dans lequel une partie interne (220) de chaque en-tête de tunnel (140, 200) stocke la pluralité d'adresses IP d'élément de transfert et une adresse IP d'élément de transfert suivant qui (i) identifie une adresse IP d'élément de transfert de saut suivant d'un élément de transfert de saut suivant le long du premier trajet candidat et (ii) est ajustée par chaque élément de transfert suivant dans le premier trajet candidat spécifié pour identifier l'adresse IP d'élément de transfert de saut suivant sans supprimer une adresse IP d'élément de transfert de l'ensemble d'adresses IP d'élément de transfert stockées dans la partie interne.

10. Procédé selon la revendication 1, dans lequel l'en-tête de tunnel est un en-tête de tunnel Geneve.

11. Procédé selon la revendication 1, dans lequel le procédé est exécuté par un processeur de trajet s'exécutant sur l'ordinateur hôte.

12. Support lisible par machine stockant un programme qui, lorsqu'il est exécuté par au moins une unité de traitement, exécute le procédé selon l'une quelconque des revendications 1 à 11.

13. Ordinateur, comprenant :
un ensemble d'unités de traitement ; et
un support lisible par machine stockant un programme qui, lorsqu'il est exécuté par au moins une des unités de traitement, exécute le procédé selon l'une quelconque des revendications 1 à 11.

14. Système, comprenant :
un réseau comprenant une pluralité d'éléments de transfert (122-128) ;
un ordinateur hôte (104, 600) ; et
une machine source (102) ;
dans lequel la machine source (102) est configurée pour :
s'exécuter sur l'ordinateur hôte (104, 600) ; et
envoyer un flux de messages de données (100) à une destination ; et
dans lequel l'ordinateur hôte (104, 600) est configuré pour :
utiliser un ensemble d'attributs associés au flux de messages de données pour identifier une règle de définition de trajet parmi une pluralité de règles de définition de trajet (640) dont chacune (i) est stockée sur l'ordinateur hôte (104, 600) et (ii) spécifie un trajet candidat différent parmi une pluralité de trajets candidats (180, 185) pour le flux de messages de données à travers le réseau vers une destination (106) du flux de messages de données, la règle de définition de trajet identifiée (640) spécifiant un premier trajet candidat (180, 185) par référence à une pluralité d'adresses (IP) d'élément de transfert de la pluralité d'éléments de transfert (120-128) sur le premier trajet candidat (180, 185) ;
avec un en-tête de tunnel externe (140, 200) qui est placé à l'extérieur des couches 2, 3 et 4 d'en-têtes (130) de chaque message de données (100) du flux, encapsuler chaque message de données (100) dans le flux, chaque en-tête de tunnel externe (140, 200) stockant la pluralité d'adresses IP d'élément de transfert identifiant la pluralité d'éléments de transfert (122-128) sur le premier trajet candidat (180, 185) spécifié par la règle de définition de trajet identifiée (640) ; et
transmettre les messages de données encapsulés le long du premier trajet candidat (180, 185) spécifié par la règle de définition de trajet identifiée (640).
